## Europäisches Patentamt
## European Patent Office
## Office européen des brevets

(11) Publication number: **0 145 433**
**B1**

(12) **EUROPEAN PATENT SPECIFICATION**

(45) Date of publication of patent specification: **31.01.90**

(51) Int. Cl.⁵: **G 01 G 23/01**

(21) Application number: **84308383.3**

(22) Date of filing: **03.12.84**

(54) Electronic weigher.

(30) Priority: **03.12.83 JP 228961/83**
**26.12.83 JP 247513/83**

(43) Date of publication of application:
**19.06.85 Bulletin 85/25**

(45) Publication of the grant of the patent:
**31.01.90 Bulletin 90/05**

(84) Designated Contracting States:
**BE CH DE FR GB IT LI NL SE**

(56) References cited:
**EP-A-0 067 637**
**EP-A-0 128 559**
**EP-A-0 144 834**
**GB-A-1 471 905**
**GB-A-2 107 062**
**US-A-3 565 194**

(73) Proprietor: **KABUSHIKI KAISHA ISHIDA KOKI
SEISAKUSHO
44, Shogoin Sannou-cho Sakyo-ku
Kyoto-shi Kyoto 606 (JP)**

(72) Inventor: **Naito, Kazufumi
Haitsu-Nishiohtsu 302 4-5, Yanagasaki
Ohtsu-shi Shiga (JP)**
Inventor: **Hikita, Michiyasu
18-17, 2-chome
Higashiyagura Kusatsu-shi Shiga (JP)**

(74) Representative: **Fane, Christopher Robin King
et al
HASELTINE LAKE & CO. Hazlitt House 28
Southampton Buildings Chancery Lane
London, WC2A 1AT (GB)**

**Description**

This invention relates to an electronic weigher such as a counting scale, weighing scale or fee scale.

An electronic weigher is susceptible to a variety of troubles, including failure of the processing circuitry (i.e. the circuitry between the input of amplification circuitry to the output of an A/D converter). Since a fault which may develop in the processing circuitry, and especially in the amplification circuitry, of such a weigher cannot be ascertained externally of the weigher, there is the danger that a weighing error outside allowable limits may occur without being noticed, thereby resulting in use of an erroneous reading. For this reason, with some prior art weighers the practice has been to load the weigher with a test weight from time to time and then examine the weight reading to determine if the weigher is operating normally. However, it is very troublesome for the user to examine the weigher every day by application of the test weight.

To overcome this problem, an electronic weigher having means for detecting faults in the processing circuitry of the weigher was proposed in GB-A-1,471,905. The proposed weigher, which comprises a load cell, connected and arranged for producing an electrical signal in dependence upon a load applied to the weigher, and processing circuitry (including amplification circuitry and an A/D converter) connected and arranged for processing that electrical signal, which processed signal is then provided by the said processing circuitry as an output signal, is provided with bias circuitry which is connected for delivering a dummy electrical signal to the amplification circuitry, when the weigher is in a test mode, for the purpose of carrying out testing of the processing circuitry. The bias circuitry proposed in GB-A-1,471,905 comprises a resistor having a resistance value which is such that the dummy electrical signal has a predetermined value which effectively simulates the electrical signal produced by the load cell upon application of a known weight to the weigher. Accordingly, the processing circuitry of the prior art weigher can be tested without the need to use test weights as described above.

However, the applicants have found that there is a disadvantage in using the bias circuitry proposed in GB-A-1,471,905, in that whenever the value of the dummy electrical signal is to be changed, it is necessary to replace the resistor with another having a different resistance value. Accordingly, simulation of the application of a variety of different test weights is not readily achievable using the weigher proposed in GB-A-1,471,905.

According to the present invention there is provided an electronic weigher comprising a load cell, connected and arranged for producing an electrical signal in dependence upon a load applied to the weigher, processing circuitry, including amplification circuitry and an analogue-to-digital converter, connected and arranged for receiving and processing the said electrical signal, which processed signal is then provided by the said processing circuitry as an output signal, and bias circuitry, comprising a resistor, connected for delivering a dummy electrical signal of predetermined magnitude to the said amplification circuitry, when the weigher has been placed in a test mode by means of closure of a switch connected between the said bias circuitry and the said amplification circuitry, for the purpose of carrying out testing of the said processing circuitry; characterised in that the said resistor is a variable resistor connected and arranged so that the magnitude of the said dummy electrical signal may be changed to a desired value by varying the resistance of the said variable resistor.

Reference will now be made, by way of example, to the accompanying drawings, in which:

Fig. 1 is a block diagram illustrating, in simplified form, the construction of a first embodiment of an electronic weigher according to the present invention;

Fig. 2 is a block diagram illustrating, in simplified form, the construction of a second embodiment of an electronic weigher according to the present invention;

Fig. 3 is a block diagram illustrating, in simplified form, the construction of a third embodiment of an electronic weigher according to the present invention;

Fig. 4 is a block diagram illustrating, in simplified form, the construction of a fourth embodiment of an electronic weigher according to the present invention;

Fig. 5 is a block diagram illustrating, in simplified form, the construction of a fifth embodiment of an electronic weigher according to the present invention;

Fig. 6 is a flowchart illustrating an example of an operating sequence of a microcomputer forming part of the electronic weigher shown in Fig. 2;

Fig. 7 is a flowchart illustrating an example of an operating sequence of a main computer forming part of the electronic weigher shown in Fig. 2;

Fig. 8 is a flowchart illustrating an example of an operating sequence of a main computer forming part of the electronic weigher shown in Fig. 3;

Fig. 9 is a flowchart illustrating an example of an operating sequence of a microcomputer forming part of the electronic weigher shown in Fig. 4;

Fig. 10 is a flowchart illustrating an example of an operating sequence of a main computer forming part of the electronic weigher shown in Fig. 4; and

Fig. 11 is a flowchart illustrating an example of the principal portion on an operating sequence of a main computer forming part of the electronic weigher shown in Fig. 5.

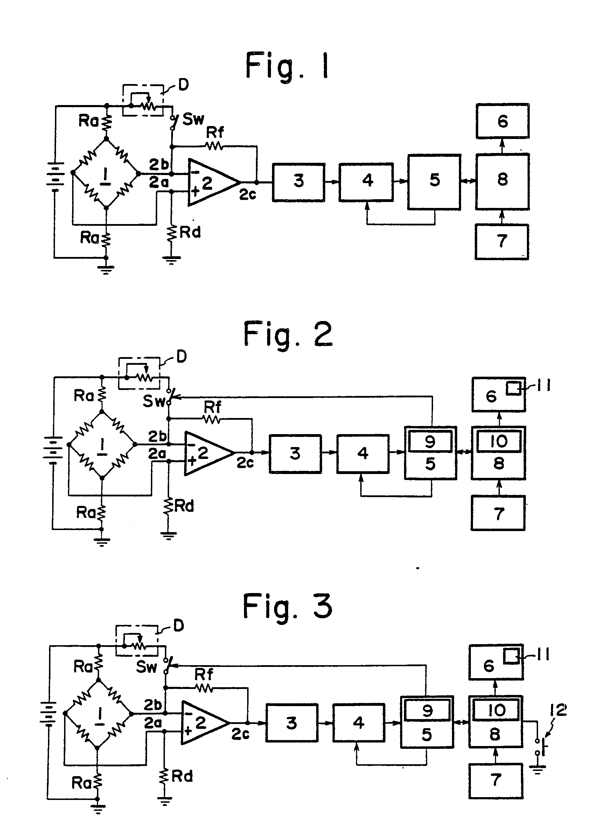

Fig. 1 is a block diagram illustrating a first embodiment of an electronic weigher according to the present invention. A bridge circuit 1 of a load cell for producing an electrical signal proportional to an applied load has output terminals connected respectively to positive and negative input terminals 2a, 2b of an operational amplifier 2. Connected across the negative input terminal 2b and a positive output terminal 2c of the operational amplifier 2 is a feedback resistor Rf. Connected between the positive input terminal 2a of the operational amplifier 2 and ground is a voltage dividing resistor Rd having the same resistance value as the feedback resistor Rf. The operational amplifier 2 and bridge circuit 1 together constitute, a differential amplifier circuit. This circuit arrangement is disclosed in the applicant's prior European application EP-A-0067637 (published 22 December 1982) and, for that reason, will not be described in detail here.

Resistors Ra connected to the bridge circuit 1 are for temperature compensating purposes. A bias circuit D constituted by a variable resistor is for producing a dummy signal for test purposes. The bias circuit D has an input terminal connected, via one of the resistors Ra, to a voltage input terminal of the load cell, and an output terminal connected via a switch Sw to the negative input terminal 2b of the operational amplifier 2. The operational amplifier 2 thus connected to the bias circuit D, via the switch Sw and negative input terminal 2b, functions as an adder when the switch Sw is closed. More specifically, when the switch Sw is in the closed state, an output current from the bridge 1 and an output current (dummy signal) from the bias circuit D flow into the feedback circuit Rf and are added together. In the present embodiment, the switch Sw is one which can be opened and closed manually to permit the operator to diagnose any malfunction of the amplification circuitry.

The output side of the operational amplifier 2 is connected, via a flicker preventing low-pass filter circuit 3, to an A/D converter 4 which converts an analog signal into a digital signal. While various arrangements may serve as the A/D converter 4, in the present embodiment use is made of a double-integrating type device in which the integrating time of the analog signal is controlled by a software timer set in a microcomputer 5. A double-integrating A/D converter of this kind is disclosed in the specification of Japanese Patent Application No. 58-25149 (EP-A2-117132), which was filed previously by the applicant and, therefore, will not be described in detail here.

The apparatus of Fig. 1 also comprises a display unit 6 for displaying weight (number), unit price, total price and the like, an input unit 7 having numeric keys and a variety of function keys, and a main microcomputer 8 (hereafter referred to as a main computer) for centralized control of the microcomputer 5, display unit 6 and input unit 7.

The operation of the present embodiment, including a diagnostic operation, will now be described.

First, to decide the output value (dummy signal) of the bias circuit D, the operator closes the switch Sw while the weigher is in an unloaded state and then, under these conditions, adjusts the variable resistor of the bias circuit D in such a manner that the value displayed by the weigher takes on a predetermined weight value, e.g. a weight value corresponding to the weight capacity of the weigher. More specifically, since the operational amplifier 2 functions as an adder when the switch Sw is in the closed state, an output current from the bridge 1 corresponding to an initial load (the weight of the weighing dish), and an output current from the bias circuit D, flow into the feedback resistor Rf and, hence, are added together. However, since the initial weight is regarded as zero, based on the ordinary function of the weigher, solely the dummy signal is converted into a weight value and displayed when the weigher is free of an applied load. Accordingly, the variable resistor is adjusted so as to cause the predetermined weight to be displayed on the display unit 6.

When the above adjustment is completed, the operator then opens the switch Sw to place the weigher in the ordinary weighing mode. In the weighing mode, the operational amplifier 2 functions as a simple differential amplifier, and the bias circuit D and operational amplifier 2 are completely isolated from each other in electrical terms. In the weighing mode, therefore, the bias circuit D has absolutely no effect upon the amplification circuitry.

To diagnose a failure in the amplification circuitry, the operator unloads the weigher and closes the switch Sw. Under such conditions, a current corresponding to the previously-adjusted predetermined weight flows from the bias circuit D into the operational amplifier 2. Accordingly, if the reading displayed on the display unit 6 is the predetermined weight, the amplification circuitry is operating normally; if not, then this indicates that the weigher has developed a fault.

A fault anywhere in the amplification circuitry from the operational amplifier to the A/D converter. can thus be detected. If the amplification circuitry is mounted on a single substrate, the circuitry may be replaced easily when a fault occurs.

Fig. 2 illustrates a second embodiment of an electronic weigher according to the present invention. Portions identical with those shown in Fig. 1 are designated by like reference characters and need not be described again. In the second embodiment of the invention, the microcomputer 5 is provided with control means 9 for controlling the switch Sw to automate the opening and closing action of the switch. In addition, the main computer 8 is provided with sensing means 10 for sensing a malfunction in the amplification circuitry, thereby automating fault diagnosis of this circuitry. The display unit 6 is provided with malfunction indicating means 11 operative when the result of the sensing operation is abnormal, thereby to notify the operator of the situation.

The control means 9 is adapted so as to operate on the basis of a command from the main computer 8. The sensing means 10 is adapted so as to sense a malfunction in the amplification circuitry, from the operational amplifier 2 to the A/ D converter 4, based on the output value of the A/D converter 4 when the switch Sw is closed. A suitable arrangement such as an alarm or a blinking lamp can be used as the malfunction indicating means 11. For example, software can be used to blank out a weight reading display section of the display unit 6 or to cause the display unit 6 to present an error display.

The control means 9 and sensing means 10 can be incorporated in one of the microcomputers or, as shown in Fig. 2, they can be apportioned to the microcomputers 5, 8, respectively. In the latter case, however, the burden borne by the main computer 8 can be lightened and the control means 9 can be made to serve a common control means for weighers having different specifications.

Since the switch Sw in the present embodiment can be opened and closed under the control of the microcomputer 5, the switch can suitably comprise a semiconductor device such as an FET.

The method of adjusting the output value (dummy signal) of the bias circuit D will now be described.

First, the switch Sw is forcibly closed to effect a changeover to an initial setting mode in which the prevailing output value of the A/D converter 4 is displayed on the display unit 6. The switch Sw is forcibly closed by substituting a ROM in the main computer 8 with a ROM for initial setting purposes, or by a method of the kind disclosed by the applicant in the specification of Japanese Patent Application Laid Open No. 58-63819, namely a method in which, with any one of the keys of the input unit 7 being held depressed, the power supply is turned on to make the changeover to the initial setting mode.

Next, with the weigher in the unloaded state, the variable resistor of the bias circuit D is adjusted in such a manner that the value displayed on the display unit 6 will attain a count value corresponding to a predetermined weight, e.g. a count value corresponding to the weighing capacity of the weigher. Alternatively, the count value representing the initial state may be stored. More specifically, since the operational amplifier 2 functions as an adder when the switch Sw is in the closed state, an output current from the bridge 1 corresponding to an initial load (the weight of the weighing dish), and an output current from the bias circuit D, flow into the feedback resistor Rf and, hence, are added together. However, since the initial weight is regarded as zero, based on the ordinary function of the weigher, solely the dummy signal is converted into a weight value and displayed when the weigher is free of an applied load. Accordingly, the variable resistor is adjusted so as to cause the predetermined weight to be displayed on the display unit 6.

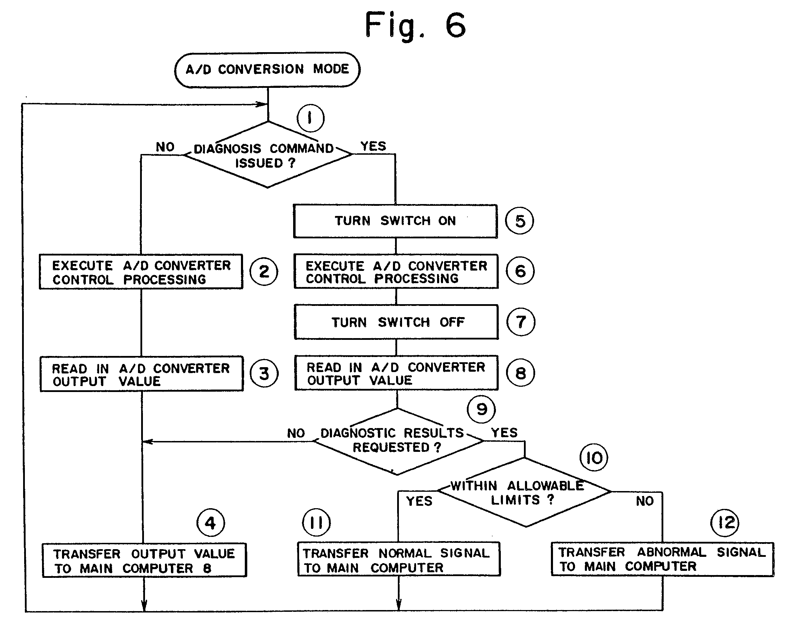

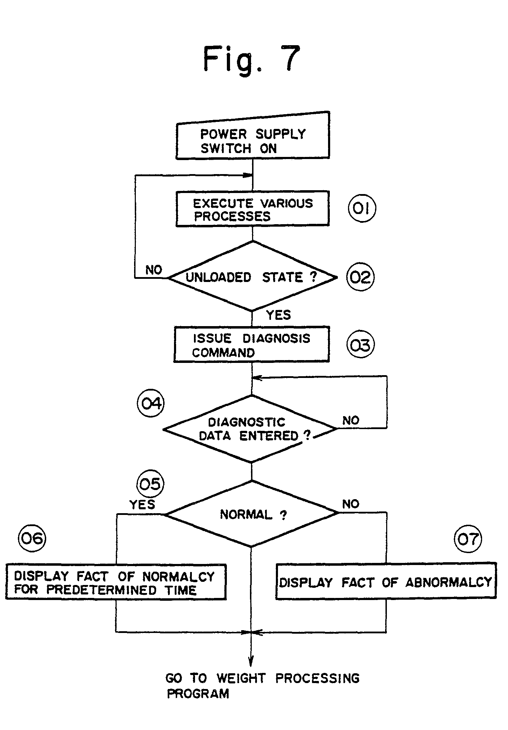

The operating sequence of the computers 5, 8 will now be described, with reference to the flowcharts of Figs. 6 and 7.

Fig. 6 is a flowchart illustrating an example of an operating sequence of the microcomputer 5, which possesses both the control means 9 and sensing means 10. Steps 5 and 7 correspond to the control means 9, and step 10 corresponds to the sensing means 10.

As shown in the flowchart of Fig. 6, the microcomputer 5 checks, at step 1, whether a diagnosis command is produced as an output by the main computer 8. In the absence of such a command, the microcomputer 5 executes step 2 to control the primary integration time of the A/D converter 4. When the A/D conversion ends, the microcomputer 5 reads in the output value of the A/D converter 4 at step 3 and transfers the output value to the main computer 8 at step 4, after which the program returns to the process step 1. This processing is repeated when the system is in the ordinary weighing mode.

When the main computer 8 issues a diagnosis command, the microcomputer 5 shifts from step 1 to a step 5 to execute fault diagnosis of the amplification circuitry. Specifically, the microcomputer 5 brings about closure of the switch Sw at step 5 and, at step 6, executes control processing similar to that of step 2. When A/D conversion processing ends, the microcomputer 5 opens the switch Sw at step 7 and then reads in the output value of the A/D converter 4 at step 8. Next, at a step 9, the microcomputer 5 determines whether the aforementioned diagnosis command contains a command requesting diagnostic results. If the decision is negative, then the program moves to the step 4 where the output of the A/D converter 4 is transferred to the microcomputer 8. If the request command is found at step 9, then the diagnostic results are obtained at a step 10. At step 10, the microcomputer 5 determines whether the output value from the A/D converter 4 lies within preset allowable limits, e.g. within tolerance with respect to a count value correponding to the weighing capacity of the weigher. Since the criterion for rendering the decision here will differ depending upon the type of weigher, the main computer 8 ordinarily is equipped with the sensing means 10. Therefore, in a case where the main computer 8 is provided with the sensing means 10, as shown in Fig. 2, the microcomputer 5 will not execute this route of the flowchart.

If the decision rendered at step 10 is that the output of the A/D converter 4 is normal, the microcomputer 5 transfers the normal signal to the main computer 8 at a step 11. If the decision at step 10 is that the output is abnormal, the microcomputer 5 transfers the abnormal signal to the main computer 8 at a step 12. The program then returns to the process step 1.

Fig. 7 is a flowchart illustrating an example of an initial setting operating sequence performed by the main computer 8. Step 05 of this flowchart corresponds to the sensing means 10.

When the power supply is turned on, the main computer 8 performs various initial settings at a step 01 and determines at a step 02 whether the weigher is in an unloaded state. Specifically, the main computer 8 decides at step 02 that the unloaded state prevails if the output value of the A/D converter 4 lies within a range predictable for the initial weight of the weigher, and that the loaded state prevails if the initial prediction is exceeded. If the weigher is in the unloaded state, then the main computer 8 enters a diagnostic mode from a step 03 onward. If the weigher is loaded, then the main computer 8 returns to step 01 to repeat the initial setting processing. It should he noted that when the loaded state continues for a predetermined period of time upon introduction of power from the power supply, the main computer 8 causes the display unit 6 to present an error indication.

When processing shifts to the step 03, the main computer 8 delivers the diagnosis command to the microcomputer 5 and then repeats a step 04 to await the transfer of diagnostic data (the output value of the A/D converter or a decision signal indicative of normality or abnormality) from the microcomputer 5. When the data is transferred, the main computer 8 executes a step 05 at which a fault in the amplification circuitry is diagnosed by determining whether the transferred data is normal. Where the transferred data is the output value of the A/D converter 4, the processing at step 05 is the same as that at the step 10 described above. If the transferred data is a decision signal indicative of normality or abnormality, on the other hand, the processing at step 05 entails recognizing the decision signal.

If the decision rendered at step 05 is that operation is normal, then the main computer 8 causes the display unit 6 to indicate the fact that operation is normal for a prescribed period of time. If the decision is that operation is abnormal, on the other hand, then the malfunction indicating means 11 is actuated at a step 07 to present an indication of abnormal operation. It should be noted that in a case where the malfunction indicating means 11 is made to double as the display unit 6, a malfunction indication can be given by blanking out entirely the weight display section of the display unit 6, or an error character can be made to appear in a specific display area of the display unit 6.

In the flowchart of Fig, 7, the arrangement is such that the diagnostic mode is established only when the power supply is turned on. However, an arrangement is possible in which the diagnostic mode is established in a case where the weigher remains in an unloaded state for a prescribed period of time during the ordinary weighing mode.

Fig. 3 illustrates a third embodiment of an electronic weigher according to the present invention. Portions identical with those shown in Figs. 1 and 2 are designated by like reference characters and are not described again. In this embodiment, a command switch 12 is provided and the arrangement is such that a fault in the amplification circuitry will be diagnosed only when the command switch 12 is operated. The control means 9 is so adapted as to be set into operation only when the command switch 12 is operated. The command switch 12 comprises a special-purpose push-button, a numeric key on the input unit 7, or the like.

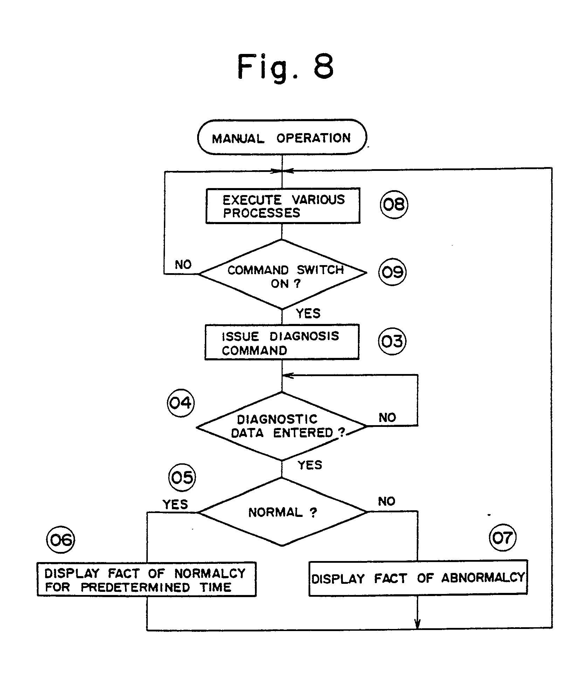

Fig. 8 is a flowchart showing an example of an operating sequence performed by the main computer 8 of the electronic weigher depicted in Fig. 3. Processing from steps 03 through 07 in Fig. 8 are identical with the processing from steps 03 through 07 of Fig. 7.

When the command switch 12 is not being pressed, the main computer 8 repeatedly executes process steps 08 and 09 to carry out ordinary weighing processing, namely weighing and calculation processing, key check processing and display processing (the latter being interrupt processing). When the command switch 12 is pressed, the program moves from step 09 to step 03 to implement fault diagnosis of the amplification circuitry.

When fault diagnosis of the amplification circuitry is executed, the weigher must be in the unloaded state, as mentioned above. In order to prevent inadvertent operation of the command switch 12 in the weighing mode, therefore, the arrangement is such that the function of the command switch 12 is inhibited when the weighing mode is in effect.

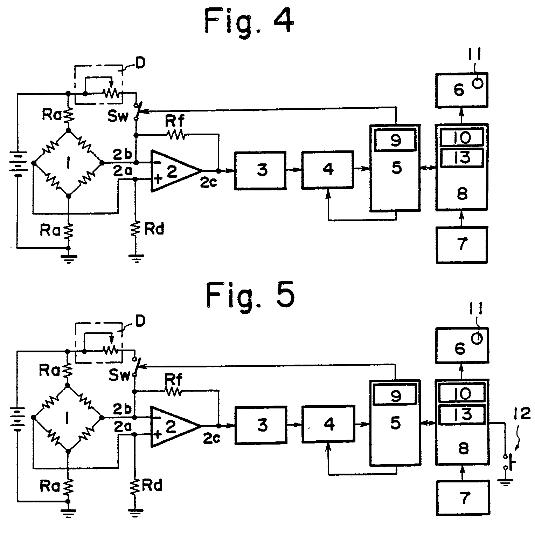

Fig. 4 illustrates a fourth embodiment of an electronic weigher according to the present invention. Portions identical with those shown in Figs. 1 and 2 are designated by like reference characters and are not described again. In this embodiment, as in the embodiments illustrated in Figs. 2 and 3, the microcomputer 5 is provided with the control means 9 for controlling the switch Sw on the basis of a command from the main computer 8, and the main computer 8 is provided with the sensing means 10 for sensing a malfunction in the amplification circuitry. The main computer 8 is further provided with safety means 13 for halting the weighing operation when the sensing means 10 senses a malfunction.

The sensing means 10 is adapted to sense a malfunction in the amplification circuitry, from the operational amplifier 2 to the A/D converter 4, base on the output value of the A/D converter 4 when the switch Sw is closed, as in the foregoing embodiments. The safety means 13 is so adapted that, when a malfunction is sensed continuously for a prescribed period of time, processing will exit from the ordinary main routine of the weigher and enter an endless routine for repeating solely an error display, whereby the ordinary function of the weigher is suspended.

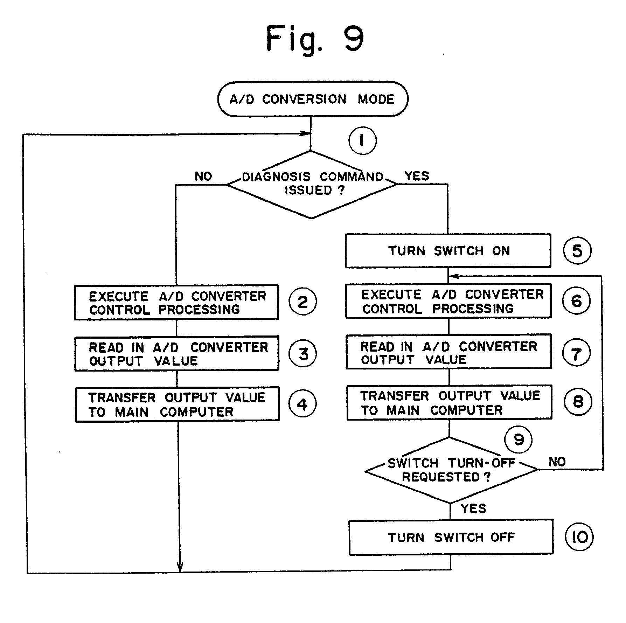

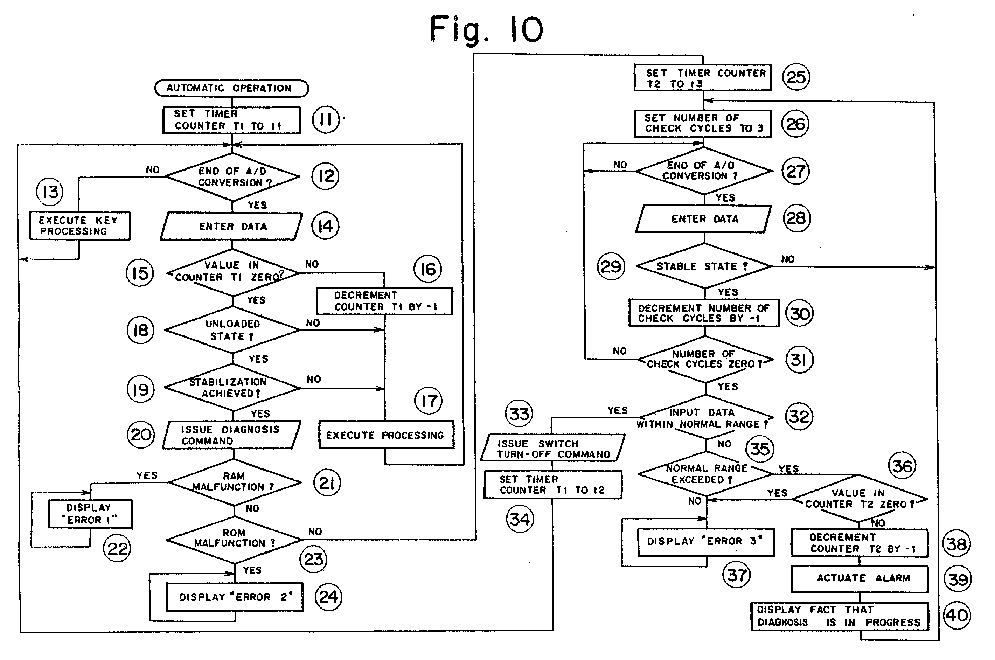

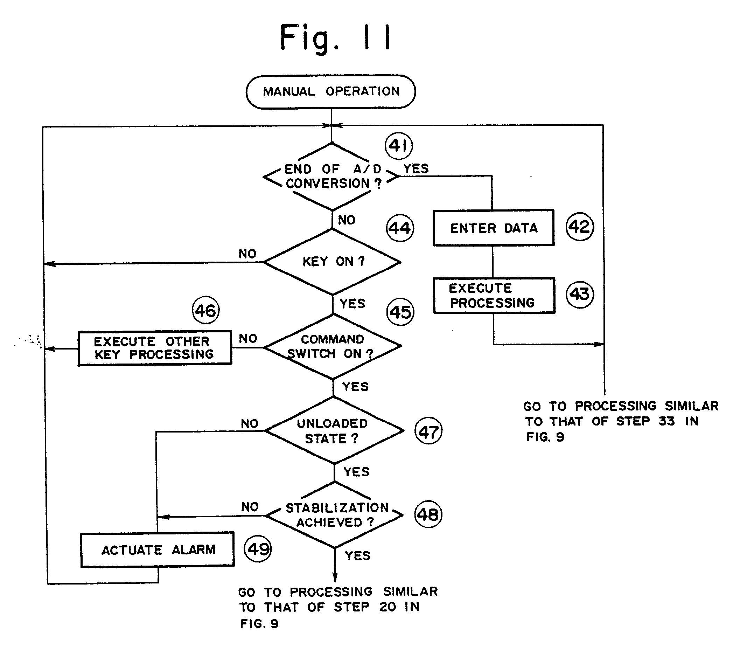

The operating sequence of the computers 5, 8 will now be described, with reference to Figs. 9 and 10.

Fig. 9 is a flowchart illustrating an example of an operating sequence performed by the microcomputer 5. Steps 5, 10 correspond to the control means 9.

In the flowchart of Fig. 9, the microcomputer 5 checks, at step 1, whether a diagnosis command is produced as an output by the main computer 8. In the absence of such a command, the microcomputer 5 executes step 2 to control the primary integration time of the A/D converter 4. When the A/D conversion ends, the microcomputer 5 reads in the output value of the A/D converter 4 at step 3 and transfers the output value to the main computer 8 at step 4, after which the program returns to the process step 1. (It should be noted that when the arrangement is such that the total output value of the A/D converter 4 is calculated by the microcomputer 5, as set forth in the specification of Japanese Patent Application No. 58-25149 (EP-A2-117132), this calculated value is the value transferred to the main computer 8.) This processing of this loop is repeated when the system is in the ordinary weighing mode.

When the main computer 8 issues a diagnosis command, the microcomputer 5 shifts from step 1 to a step 5 to execute processing for controlling the switch Sw. Specifically, the microcomputer 5 closes the switch Sw at step 5 and, at step 6, executes control processing similar to that of step 2. When A/D conversion processing ends, the microcomputer 5 reads in the output value of the A/D converter 4 at step 7 and transfers the output value to the main computer 8 at step 8. Next, at a step 9, the microcomputer 5 determines whether the main computer 8 is producing a command requesting that the switch Sw be opened. If such a request command is being produced, then the switch Sw is opened at step 10 and the program returns to the process step 1. In the absence of the request command, the program returns to the step 6 where processing control for the A/D converter 4 is executed.

When fault diagnosis of the amplification circuitry is thus completed, the microcomputer 5 repeatedly executes the processing of steps 6 through 9.

Fig. 10 is a flowchart illustrating an example of an operating sequence performed by the main computer 8. Step 32 of this flowchart corresponds to the sensing means 10, steps 37, 39 correspond to the malfunction indicating means 11, and the endless loop in which steps 22, 24 and 37 are executed repeatedly corresponds to the safety means 13.

First, at an initial setting step (step 11), the main computer 8 sets a timer counter T1, which is for controlling the timing t1 at which fault diagnosis of the amplification circuitry, begins to t1 as an initial value. The initial value t1 is set to a time as will render negligible the influence of power drift developed by the operational amplifier 2.

When the above-described setting operation is completed, the main computer 8 determines at a step 12 whether the A/D converter 4 has produced a completion signal, which signal is produced at the end of each A/D conversion. In the absence of the signal, the system is returned to step 12 by execution of prescribed key processing. If the end signal is produced, then weight data converted into a digital value is entered at a step 14. Next, the main computer 8 determines at a step 15 whether the value in the timer counter T1 is zero.

If it is not, the value in the timer counter T1 is decremented by one at a step 16 and processing is then executed at a step 17. Thereafter, the program returns to the process of step 12. The processing at step 17 includes processing for converting a digital value into a weight value, processing for calculating a total price by multiplying a weight by a unit price, and the like.

If the decision rendered at the step 15 is that the value in the timer counter is zero (i.e. that the time t1 set as the initial value has expired), the main computer 8 determines at a step 18 whether the weigher is in an unloaded state. It is decided that the unloaded state prevails if the abovementioned weight data lies within a range predictable as the initial weight of the weigher, and that the loaded state prevails if the weight data lies outside this range.

Since any fault in the amplification circuitry cannot be diagnosed if the weigher is loaded, the main computer 8 repeats the processing of the loop from steps 17 to 12 to await the unloaded state. When the unloaded state is attained, the main computer 8 determines at a step 19 whether the weigher has stabilized, Stability is checked in order to confirm continuance of the unloaded state, thus to avoid any impediment to the ensuing self-diagnosis.

If the weigher is unstable, the main computer 8 repeats the processing of the loop from steps 17 to 12 to await stabilization. When the weigher has stabilized, the main computer 8 sends the diagnosis command to the microcomputer 5 at a step 20, so that the program moves to the diagnostic mode from this point onward.

In the diagnostic mode, the main computer 8 first performs a RAM check at a step 21 and then a ROM check at a step 23. Since a time delay arises in a step response owing to the filter circuit 3 even when the switch Sw is closed, steps 21 and 23 are executed to make effective use of the waiting time. The RAM is a memory for temporarily storing such data as unit price, weight and total price, and the ROM is a memory for storing programs, a character conversion table and the like. Both memories are incorporated within the main computer 8. The RAM check is performed by moving registered data out to a surplus area and checking the registration area.

If a problem is found as a result of the RAM check, the program enters an endless loop in which the characters "ERROR l" are repeatedly displayed. If no malfunction is found, the program moves to the ROM check. If a problem is found as a result of the ROM check, the program enters an endless loop in which the characters "ERROR 2" are repeatedly displayed. If no malfunction is found, the program moves to processing from a step 25 onward. When the program enters the endless loop for repeatedly displaying the error characters, the other functions of the weigher are suspended in their entirety. This is to avoid problems due to erroneous operation of the weigher.

Next, at a step 25, the main computer 8 sets a timer counter T2 to a display time (t3) for displaying the fact that the weigher is undergoing self-diagnosis (as by displaying characters stating to the effect that self-diagnosis is in progress). Then, at a step 26, the main computer 8 sets the number of times (e.g. three) that the stability of the output value from the A/D converter 4 is to be checked. The reason for this is the danger that an error may appear in the results of self-diagnosis if the output value of the A/D converter 4 is unstable. Accordingly, when the output value is found to be unstable, the main computer 8 repeatedly executes the loop from step 26 to step 29 to await stabilization of the output value.

When setting of the number of check cycles is completed, the main computer 8 repeats the step 27 to wait for the completion signal from the A/D converter 4. When the completion signal is issued, data undergoing diagnosis is applied at a step 28 and, at a step 29, it is determined whether the output value of the A/D converter 4 is stable. If it is stable, then the main computer 8 decrements the number of check cycles by one at a step 30 and repeats the loop from steps 27 to 31 until the number of check cycles reaches zero. At such time the output value of the A/D converter 4 is considered to be perfectly stable. The main computer 8 therefore determines whether the input data read in last lies within normal limits, i.e. whether the data lies within tolerance with respect to the count value equivalent to the weighing capacity of the weigher, which corresponds to the dummy signal. If the data falls within the normal limits, the main computer 8 at a step 33 supplies the microcomputer 5 with the command for opening the switch Sw. At the next step 34, the timer counter T1 is set to the time for the next diagnosis (e.g., one hour), and processing returns to the step 12. Accordingly, one hour later, self-diagnosis of the amplification circuitry will be performed again.

If the data is not within the normal range, however, this can be construed as indicating that the weigher has been loaded down with an article inadvertently during self-diagnosis, with the result that the normal limits have been exceeded. Accordingly, the main computer 8 determines, at a step 35, whether the normal limits are exceeded. If the answer is affirmative, the program moves to process steps from step 36 onward to issue an alarm calling for removal of the load. If the answer at step 35 is negative, then this means that the amplification circuitry has developed a malfunction. As a result, the program moves directly to an endless loop for repeatedly displaying "ERROR 3".

The main computer 8 determines at the step 36 whether the value in the timer counter T2 is zero. If the answer is negative, the value is decremented by one at a step 38, an alarm is activated at the next step 39, and the fact that diagnosis is in progress is displayed at the following step 40. The program then moves to the step 26. When the operator notices that the weigher is being loaded by the article, removes the article and, as a result, the input data falls within the normal limits during the repeated processing of the loop from steps 35 to 26, the main computer 8 shifts from the step 32 to the step 33 to end the self diagnosis of the amplification circuitry. If the data is still abnormal even after expiration of the alarm time (t3), it is construed that the amplification circuit is malfunctioning. Accordingly, the main computer 8 moves from step 36 to step 37 to execute the endless loop for the repeated display of "ERROR 3". All other functions of the weigher are thus suspended to prevent problems caused by erroneous weigher operation.

In the present embodiment, the arrangement is such that all display processing inclusive of the error displays is executed by an interrupt at a prescribed period. Furthermore, error numbers are affixed to the error displays, as in "ERROR 3", in order to specify the location of the failure so that the malfunctioning component part may be replaced more readily.

Fig. 5 illustrates a fifth embodiment of an electronic weigher according to the present invention. Portions identical with those shown in Figs. 1 through 4 are designated by like reference characters and are not described again. In this embodiment, the command switch 12 is provided and the arrangement is such that any fault in the amplification circuitry will be diagnosed only when the command switch 12 is operated. The control means 9 is so adapted as to be set into operation only when the command switch 12 is operated. The command switch 12 comprises a special-purpose push-button, for example.

Fig. 11 is a flowchart showing an example of a principal portion of an operating sequence performed by the main computer 8 depicted in Fig. 3. This flowchart differs from that shown in Fig. 10 in that the processing indicated by steps II, 15, 16 and 34 in Fig. 10 is deleted and replaced by processing indicated by newly added steps 45, 47, 48, 49. In the present flowchart, therefore, the steps from 20 through 33 shown in Fig. 10 are the same as in the present embodiment and, hence, are not shown.

It should be noted that the processing indicated by steps 44 and 46 in Fig. 11 are the same in content as the key processing step 13 of Fig. 10.

In the flowchart of Fig. 11, the main computer 8 first executes the key processing routine from step 44 onward during the absence of the completion signal from the A/D converter 4 (step 41). If the result of checking whether the command switch is on at step 45 is YES, then it is determined at step 47 whether the weigher is unloaded. If the answer is affirmative, then it is determined at step 48 whether stabilization has been attained. If the answer here is affirmative, processing identical with that from step 20 onward in Fig. 10 is executed. The main computer 8 executes fault diagnosis of the ROM and RAM which are built in the main computer, and of the amplification circuitry. If the results are normal, the program returns to step 41 through processing identical with that of step 33 in Fig. 10.

If the decision rendered at step 47 or 48 is negative, then the main computer 8 activates an alarm at step 49 to inform the operator of the fact that the weigher is not in a state capable of self-diagnosis, i.e. that the weigher should be placed in an unloaded state. This is followed by returning to step 41. When the command switch 12 is pressed with the weigher in the unloaded state, the main computer 8 executes self-diagnosis of the weigher via steps 45 through 48.

It should be noted that the invention is not limited to the embodiments thereof described above but can be modified in various ways within the scope of the claims. As an example, the malfunction indicating means can be adapted to issue an alarm in the form of a voice.

## Claims

1. An electronic weigher comprising a load cell (1), connected and arranged for producing an electrical signal in dependence upon a load applied to the weigher, processing circuitry (2, 3, 4), including amplification circuitry (2) and an analogue-to-digital converter (4), connected and arranged for receiving and processing the said electrical signal, which processed signal is then provided by the said processing circuitry as an output signal, and bias circuitry (D), comprising a resistor, connected for delivering a dummy electrical signal of predetermined magnitude to the said amplification circuitry (2), when the weigher has been placed in a test mode by means of closure of a switch (Sw) connected between the said bias circuitry (D) and the said amplification circuitry (2), for the purpose of carrying out testing of the said processing circuitry (2, 3, 4); characterised in that the said resistor is a variable resistor connected and arranged so that the magnitude of the said dummy electrical signal may be changed to a desired value by varying the resistance of the said variable resistor.

2. A weigher as claimed in claim 1, wherein the said variable resistor is connected between an input terminal of the said load cell (1) and an input terminal (2b) of the amplification circuitry (2), via the said switch (Sw).

3. A weigher as claimed in claim 2, further comprising control means (9), operable to instigate the said test mode of the weigher by bringing about closure of the said switch (Sw), fault detection means (10) connected to the said processing circuitry (2, 3, 4) for determining, on the basis of the output signal provided by the processing circuitry during the test mode, whether that circuitry is malfunctioning, and alarm means (11) connected to the said fault detection means (10) and arranged for providing an alarm indication if the said fault detection means (10) determine that the processing circuitry (2, 3, 4) is malfunctioning.

4. A weigher as claimed in claim 3, wherein the said control means (9) are operable to check, before instigating the test mode, whether the weigher is in a loaded state, and, if that is found to be the case, to provide an alarm indication of that fact and to inhibit instigation of the test mode until the weigher is found to be in an unloaded state.

5. A weigher as claimed in claim 3 or 4, further comprising a command switch (12) arranged so that operation of the said control means (9) is inhibited unless the command switch (12) is closed.

6. A weigher as claimed in claim 3, 4 or 5, further comprising inhibiting means (13) for preventing the weigher from performing a weighing operation if the said fault detection means (10) have determined that the processing circuitry (2, 3, 4) is malfunctioning.

7. A weigher as claimed in claim 6, wherein the said inhibiting means (13) are operable only when malfunction of the processing circuitry (2, 3, 4) has continued for a predetermined period of time.

## Patentansprüche

1. Elektronische Waage mit einer Lastzelle (1), die so angeordnet und geschaltet ist, daß sie ein elektrisches Signal in Abhängigkeit von einer der Waage zugeführten Last erzeugt, einer Verarbeitungsschaltung (2,3,4), die eine Verstärkungsschaltung (2) und einen Analog-Digital-Wandler (4) enthält, die so angeordnet und geschaltet ist, daß sie das elektrische Signal empfängt und verarbeitet, wobei das verarbeitete Signal dann von der Verarbeitungsschaltung als Ausgangssignal geliefert wird, und einer Vorspannschaltung (D) mit einem Widerstand, die derart geschaltet ist, daß sie ein elektrisches Leersignal von vorbestimmter Größe an der Verstärkungsschaltung (2) ausgibt, wenn die Waage durch Schließen eines Schalters (Sw), der zwischen der Vorspannschaltung (D) und der Verstärkungsschaltung (2) geschaltet ist, in einen Testmodus versetzt wurde, um einen Test der Verarbeitungsschaltung (2,3,4) durchzuführen, dadurch gekennzeichnet, daß der Widerstand ein regelbarer Widerstand ist, der derart geschaltet und angeordnet ist, daß die Größe des elektrischen Leersignals durch Verändern des Widerstandswertes des regelbaren Widerstands auf einen gewünschten Wert verändert werden kann.

2. Waage nach Anspruch 1, bei der der regelbare Widerstand über den Schalter (Sw) zwischen einem Eingangsanschluß der Lastzelle (1) und einem Eingangsanschluß (2b) der Verstärkungsschaltung (2) geschaltet ist.

3. Waage nach Anspruch 2, ferner mit Steuermitteln (9) zum Einleiten des Testmodus der Waage durch Schließen des Schalters (Sw), Fehlererkennungsmitteln (10), welche mit der Verarbeitungsschaltung (2,3,4) derart verbunden sind, daß sie auf der Basis des von der Verarbeitungsschaltung während des Testmodus gelieferten Ausgangssignals feststellen, ob diese Schaltung funktionsgestört ist, und Alarmmitteln (11) welche mit den Fehlererkennungsmitteln (10) verbunden und derart angeordnet sind, daß sie eine Alarmanzeige liefern, wenn die Fehlererkennungsmittel (10) feststellen, daß die Verarbeitungsschaltung (2,3,4) funktionsgestört ist.

4. Waage nach Anspruch 3, bei der die Steuermittel (9) derart betreibbar sind, daß sie vor dem Einleiten des Testmodus prüfen, ob sich die Waage in einem belasteten Zustand befindet, und daß sie, wenn dies der Fall ist, eine diese Tatsache anzeigende Alarmanzeige liefern und die Einleitung des Testmodus sperren, bis festgestellt wird, daß sich die Waage in einem unbelasteten Zustand befindet.

5. Waage nach Anspruch 3 oder 4, ferner mit einem Befehlsschalter (12), welcher derart angeordnet ist, daß der Betrieb der Steuermittel (9) gesperrt ist, bis der Befehlsschalter (12) geschlossen ist.

6. Waage nach Anspruch 3, 4 oder 5, ferner mit Sperrmitteln (13) zum Verhindern der Durchführung eines Wägevorgangs durch die Waage, wenn die Fehlererkennungsmittel (10) festgestellt haben, daß die Verarbeitungsschaltung (2,3,4) funktionsgestört iat.

7. Waage nach Anspruch 6, bei der die Sperrmittel (13) nur dann betreibbar sind, wenn eine Funktionsstörung der Verarbeitungsschaltung (2,3,4) über einen vorbestimmten Zeitraum angedauert hat.

**Revendications**

1. Balance électronique comprenant une cellule dynamométrique (1) reliée et agencée en vue de produire un signal électrique en fonction d'une charge appliquée à la balance, un circuit de traitement (2, 3, 4) comprenant un circuit d'amplification (2) et un convertisseur analogique/numérique (4), relié et agencé en vue de recevoir et de traiter ledit signal électrique qui, après avoir été traité, est ensuite fourni par lesdits circuits de traitement en tant que signal de sortie, et un circuit de polarisation (D) comprenant une résistance et relié en vue de délivrer un faux signal électrique d'une amplitude prédéterminée audit circuit d'amplification (2), lorsque la balance a été placée en mode essai au moyen de la fermeture d'un interrupteur (Sw) relié entre ledit circuit de polarisation (D) et ledit circuit d'amplification (2), dans le but d'effectuer un essai dudit circuit de traitement (2, 3, 4), caractérisée par le fait que ladite résistance est une résistance variable reliée et agencée de manière à ce que l'amplitude dudit faux signal électrique puisse être réglée à une valeur souhaitée en modifiant la valeur ohmique de ladite résistance variable.

2. Balance selon la revendication 1, dans laquelle ladite résistance variable est reliée entre une borne d'entrée de ladite cellule dynamométrique (1) et une borne d'entrée (2b) du circuit d'amplification (2), par l'intermédiaire dudit interrupteur (Sw).

3. Balance selon la revendication 2, comprenant par ailleurs des moyens de commande (9) pouvant agir de manière à provoquer ledit mode essai de la balance en commandant la fermeture dudit interrupteur (Sw), des moyens (10) de détection de défaut reliés audit circuit de traitement (2, 3, 4) afin de déterminer, sur la base du signal de sortie fourni par le circuit de traitement pendant le mode essai, si ce circuit fonctionne mal, et des moyens d'avertissement (11) reliés auxdits moyens (10) de détection de défaut et agencés en vue de fournir une indication d'avertissement dans le cas où le moyen (10) de détection de défaut détermine que le circuit de traitement (2, 3, 4) fonctionne mal.

4. Balance selon la revendication 3, dans laquelle lesdits moyens de commande (9) peuvent agir de manière à vérifier, avant le déclenchement du mode essai, si la balance est à l'état chargé et, si cela est le cas, à fournir une indication d'avertissement de ce fait et à neutraliser le déclenchement du mode essai jusqu'à ce que la balance se trouve à l'état non chargé.

5. Balance selon la revendication 3 ou 4, comprenant par ailleurs un interrupteur de commande (12) agencé de manière à ce que le fonctionnement desdits moyens de commande (9) soit nentralisé à moins que l'interrupteur (12) ne soit fermé.

6. Balance selon la revendication 3, 4 ou 5, comprenant par ailleurs des moyens de neutralisation (13) pour empêcher la balance d'effectuer une opération de pesage si lesdits moyens de détection de défaut (10) ont déterminé que le circuit de traitement (2, 3, 4) fonctionne mal.

7. Balance selon la revendication 6, dans laquelle lesdits moyens de neutralisation (13) n'entrent en action que lorsque le mauvais fonctionnement du circuit de traitement (2, 3, 4) s'est poursuivi pendant un laps de temps prédéterminé.

# Fig. 1

# Fig. 2

# Fig. 3

1

# Fig. 4

# Fig. 5

# Fig. 6

A/D CONVERSION MODE

① DIAGNOSIS COMMAND ISSUED ?
— NO
— YES

⑤ TURN SWITCH ON

② EXECUTE A/D CONVERTER CONTROL PROCESSING

⑥ EXECUTE A/D CONVERTER CONTROL PROCESSING

⑦ TURN SWITCH OFF

③ READ IN A/D CONVERTER OUTPUT VALUE

⑧ READ IN A/D CONVERTER OUTPUT VALUE

⑨ DIAGNOSTIC RESULTS REQUESTED ?
— NO
— YES

⑩ WITHIN ALLOWABLE LIMITS ?
— YES
— NO

④ TRANSFER OUTPUT VALUE TO MAIN COMPUTER 8

⑪ TRANSFER NORMAL SIGNAL TO MAIN COMPUTER

⑫ TRANSFER ABNORMAL SIGNAL TO MAIN COMPUTER

EP 0 145 433 B1

# Fig. 7

```
        ┌──────────────────┐
        │  POWER SUPPLY    │
        │  SWITCH ON       │
        └──────────────────┘
                 │
                 ▼
        ┌──────────────────┐
        │ EXECUTE VARIOUS  │   (01)
        │ PROCESSES        │
        └──────────────────┘
                 │
                 ▼
      NO    ◇ UNLOADED STATE ? ◇    (02)
                 │
                YES
                 ▼
        ┌──────────────────┐
        │ ISSUE DIAGNOSIS  │   (03)
        │ COMMAND          │
        └──────────────────┘
                 │
                 ▼
  (04)     ◇ DIAGNOSTIC
            DATA ENTERED ? ◇    NO
                 │
                YES
                 ▼
  (05)  YES  ◇ NORMAL ? ◇   NO
                 │
  ┌────────────────────────────┐    ┌────────────────────────────┐
  │ DISPLAY FACT OF NORMALCY   │    │ DISPLAY FACT OF ABNORMALCY │
  │ FOR PREDETERMINED TIME     │    │                            │
  └────────────────────────────┘    └────────────────────────────┘
     (06)                                  (07)
                 │
                 ▼
        GO TO WEIGHT PROCESSING
        PROGRAM
```

# Fig. 8

```
                    ┌─────────────────────┐
                    │  MANUAL  OPERATION   │
                    └─────────────────────┘
                               │
                               ▼
              ┌────────────────────────────┐
              │  EXECUTE  VARIOUS          │    08
              │  PROCESSES                 │
              └────────────────────────────┘
                               │
                               ▼
         NO              ◇ COMMAND SWITCH ◇        09
        ◄────────────────   ON ?
                               │
                              YES
                               ▼
              ┌────────────────────────────┐
              │  ISSUE  DIAGNOSIS          │    03
              │  COMMAND                   │
              └────────────────────────────┘
                               │
                               ▼
     04          ◇ DIAGNOSTIC ◇        NO
                   DATA ENTERED ?  ────────────►
                               │
                              YES
                               ▼
     05    YES      ◇ NORMAL ? ◇       NO
        ◄───────────              ───────────►

06                                                  07
┌──────────────────────────┐      ┌──────────────────────────┐
│ DISPLAY FACT OF NORMALCY │      │ DISPLAY FACT OF ABNORMALCY│
│ FOR PREDETERMINED TIME   │      └──────────────────────────┘
└──────────────────────────┘
```

# Fig. 9

A/D CONVERSION MODE

1 — DIAGNOSIS COMMAND ISSUED ?

NO:
- EXECUTE A/D CONVERTER CONTROL PROCESSING — 2
- READ IN A/D CONVERTER OUTPUT VALUE — 3
- TRANSFER OUTPUT VALUE TO MAIN COMPUTER — 4

YES:
- TURN SWITCH ON — 5
- EXECUTE A/D CONVERTER CONTROL PROCESSING — 6
- READ IN A/D CONVERTER OUTPUT VALUE — 7
- TRANSFER OUTPUT VALUE TO MAIN COMPUTER — 8
- 9 — SWITCH TURN-OFF REQUESTED ?
- YES: TURN SWITCH OFF — 10

# Fig. 10

AUTOMATIC OPERATION

⑪ SET TIMER COUNTER T1 TO l1

⑫ END OF A/D CONVERSION ?
— NO → ⑬ EXECUTE KEY PROCESSING
— YES

⑭ ENTER DATA

⑮ VALUE IN COUNTER T1 ZERO?
— NO → ⑯ DECREMENT COUNTER T1 BY -1
— YES

⑱ UNLOADED STATE ?
— NO →
— YES

⑲ STABILIZATION ACHIEVED ?
— NO →
— YES

⑰ EXECUTE PROCESSING

⑳ ISSUE DIAGNOSIS COMMAND

㉑ RAM MALFUNCTION ?
— YES → ㉒ DISPLAY "ERROR 1"
— NO

㉓ ROM MALFUNCTION ?
— NO →
— YES → ㉔ DISPLAY "ERROR 2"

㉕ SET TIMER COUNTER T2 TO l3

㉖ SET NUMBER OF CHECK CYCLES TO 3

㉗ END OF A/D CONVERSION ?
— NO →
— YES

㉘ ENTER DATA

㉙ STABLE STATE ?
— NO →
— YES

㉚ DECREMENT NUMBER OF CHECK CYCLES BY -1

㉛ NUMBER OF CHECK CYCLES ZERO ?
— NO →
— YES

㉜ INPUT DATA WITHIN NORMAL RANGE ?
— YES → ㉝ ISSUE SWITCH TURN-OFF COMMAND
— NO

㉞ SET TIMER COUNTER T1 TO l2

㉟ NORMAL RANGE EXCEEDED ?
— YES → ㊱ VALUE IN COUNTER T2 ZERO ?
— NO

㊱ VALUE IN COUNTER T2 ZERO ?
— YES →
— NO → ㊳ DECREMENT COUNTER T2 BY -1

㊲ DISPLAY "ERROR 3"

㊳ DECREMENT COUNTER T2 BY -1

㊴ ACTUATE ALARM

㊵ DISPLAY FACT THAT DIAGNOSIS IS IN PROGRESS

EP 0 145 433 B1

# Fig. 11

GO TO PROCESSING SIMILAR
TO THAT OF STEP 33 IN
FIG. 9

GO TO PROCESSING SIMILAR
TO THAT OF STEP 20 IN
FIG. 9